# EUROPEAN PATENT APPLICATION

(11) **EP 3 069 949 A1**
(43) Date of publication of application: **21.09.2016**
(21) Application number: 14870624.5
(22) Date of filing: 02.09.2014
(51) Int. Cl.: B60W 30/00, B60R 16/02

(54) **VEHICLE SYSTEM CONTROL METHOD AND CONTROL SYSTEM**

(30) Priority: 13.12.2013 CN 201310687888
(71) Applicant: Huawei Technologies Co., Ltd., Longgang District Shenzhen, Guangdong 518129 (CN)
(72) Inventor: CHEN, Shanxi, Shenzhen Guangdong 518129 (CN)
(74) Representative: Thun, Clemens
(86) International application number: PCT/CN2014/085765
(87) International publication number: WO 2015/085798

(57) **Abstract**

Embodiments of the present invention disclose a vehicle control method, including: receiving, by a driving system, a first signal from an application system; determining, by the driving system, a type of a running program in the application system according to the first signal; and if the running program is a program of an unsafe type, and a current driving mode is a manual driving mode, switching, by the driving system, from the current driving mode to an automatic driving mode. The embodiments of the present invention further disclose another vehicle control method, including: receiving, by an application system, a second signal from a driving system; determining, by the application system, a current driving mode according to the second signal; and if the current driving mode is a manual driving mode, and a running program is a program of an unsafe type, switching, by the application system, the program of an unsafe type. The embodiments of the present invention further provide a related driving system, an application system, and a vehicle control system. The embodiments of the present invention can effectively improve driving safety.

## Description

This application claims priority to Chinese Patent No. 201310687888.6, filed with the Chinese Patent Office on December 13, 2013 and entitled "VEHICLE SYSTEM CONTROL METHOD AND CONTROL SYSTEM", which is incorporated herein by reference in its entirety.

### TECHNICAL FIELD

The present invention relates to a system control field, and in particular, to a vehicle system control method, a related driving system, a related application system, and a vehicle control system.

### BACKGROUND

With development of science and technology, electronization of a vehicle becomes more popular, and increasing application programs are also introduced into a vehicle control system. A car is used as an example. Abundant application programs are installed on many cars at the present stage, which can implement many functions, such as radio listening, music playing, and video calling. When a driver drives a vehicle, these programs allow the driver to enjoy more services, thereby enriching driving experience of the driver. However, attention of the driver is distracted when the driver uses these programs in a driving process, and therefore driving safety of the driver cannot be ensured.

To improve safety of driving, many vehicles at the present stage are equipped with a function of automatic driving, so that the vehicle can be driven automatically without a driver, thereby avoiding a driving risk caused by distraction of attention of the driver in a driving process.

However, an automatic driving technology at the present stage is immature, and therefore cannot completely replace manual driving. In many cases such as a complex road condition, the driver still needs to switch a driving mode to a manual driving mode. If the driver is using the foregoing programs at this time, attention or sight of the driver may still be distracted, and the driving safety still cannot be ensured.

### SUMMARY

Embodiments of the present invention provide a vehicle control method, a related driving system, a related application system, and a related vehicle control system, which can improve safety of driving and ensure driving safety.

A first aspect of the embodiments of the present invention provides a vehicle control method, including:
receiving, by a driving system, a first signal from an application system, where the application system is configured to control an application program in a vehicle;
determining, by the driving system, a type of a running program in the application system according to the first signal; and
if the running program is a program of an unsafe type, and the driving system determines that a current driving mode is a manual driving mode, switching, by the driving system, from the current driving mode to an automatic driving mode.

With reference to the first aspect of the embodiments of the present invention, in a first implementation manner of the first aspect of the embodiments of the present invention, the program of an unsafe type includes: a program that requires a user to input information, or a video play program.

A second aspect of the embodiments of the present invention provides a vehicle control method, including:
receiving, by an application system, a second signal from a driving system, where the application system is configured to control an application program in a vehicle;
determining, by the application system, a current driving mode according to the second signal; and
if the current driving mode is a manual driving mode, and the application system determines that a running program is a program of an unsafe type, switching, by the application system, the program of an unsafe type.

With reference to the second aspect of the embodiments of the present invention, in a first implementation manner of the second aspect of the embodiments of the present invention, the program of an unsafe type includes: a program that requires a user to input information, or a video play program.

With reference to the second aspect and the first implementation manner of the second aspect of the embodiments of the present invention, in a second implementation manner of the second aspect of the embodiments of the present invention, the switching, by the application system, the program of an unsafe type includes:
disabling, by the application system, the program of an unsafe type, or switching, by the application system, the program of an unsafe type to a background process.

With reference to the second aspect and the first implementation manner of the second aspect of the embodiments of the present invention, in a third implementation manner of the second aspect of the embodiments of the present invention, that the application system determines that a running program is a program of an unsafe type includes:
acquiring, by the application system, a safety identifier of the running program; and
determining, by the application system according to the safety identifier, whether the running program is a program of an unsafe type.

With reference to the third implementation manner of the second aspect of the embodiments of the present invention, in a fourth implementation manner of the second aspect of the embodiments of the present invention, the acquiring, by the application system, a safety identifier of the running program includes:
acquiring, by the application system when installing the program, an installation file of the program, and acquiring the safety identifier from the installation file; or
setting, by the application system when installing the program, the safety identifier of the program; or
acquiring, by the application system when installing the program, the safety identifier that is of the program and is input by a user.

With reference to the third implementation manner of the second aspect of the embodiments of the present invention, in a fifth implementation manner of the second aspect of the embodiments of the present invention, the acquiring, by the application system, a safety identifier of the running program includes:
receiving, by the application system, an operation signal of the program; and
generating, by the application system, the safety identifier of the program.

A third aspect of the embodiments of the present invention provides a driving system, including:
a first receiving module, configured to receive a first signal from an application system;
a first determining module, configured to determine a type of a running program in the application system according to the first signal received by the first receiving module; and
a first switching module, configured to: in a case that the first determining module determines that the running program is a program of an unsafe type and a current driving mode is a manual driving mode, switch the current driving mode to an automatic driving mode.

A fourth aspect of the embodiments of the present invention provides an application system, including:
a second receiving module, configured to receive a second signal from a driving system;
a second determining module, configured to determine a current driving mode according to the second signal received by the second receiving module; and
a second switching module, configured to: in a case that the second determining module determines that the current driving mode is a manual driving mode and a running program is a program of an unsafe type, switch the program of an unsafe type.

With reference to the fourth aspect of the embodiments of the present invention, in a first implementation manner of the fourth aspect of the embodiments of the present invention, the second switching module includes:
an acquiring submodule, configured to acquire a safety identifier of the running program;
a determining submodule, configured to determine, according to the safety identifier acquired by the acquiring submodule, whether the running program is a program of an unsafe type; and
a switching submodule, configured to switch the program of an unsafe type.

With reference to the first implementation manner of the fourth aspect of the embodiments of the present invention, in a second implementation manner of the fourth aspect of the embodiments of the present invention, the switching submodule is specifically configured to:
disable the program of an unsafe type, or switch the program of an unsafe type to a background process.

With reference to the first implementation manner of the fourth aspect and the second implementation manner of the fourth aspect of the embodiments of the present invention, in a third implementation manner of the fourth aspect of the embodiments of the present invention, the acquiring submodule includes:
a first acquiring unit, configured to acquire an installation file of a program to be installed; and
a second acquiring unit, configured to acquire a safety identifier of the installed program.

With reference to the first implementation manner of the fourth aspect and the second implementation manner of the fourth aspect of the embodiments of the present invention, in a fourth implementation manner of the fourth aspect of the embodiments of the present invention, the acquiring submodule includes:
a receiving unit, configured to receive an operation signal of the program; and
an identifying unit, configured to generate the safety identifier of the program.

A fifth aspect of the embodiments of the present invention provides a vehicle control system, including: an application system and the driving system provided in the third aspect of the embodiments of the present invention.

A sixth aspect of the embodiments of the present invention provides a vehicle control system, including: a driving system, and the application system provided in the fourth aspect or any one of the first to the fourth implementation manners of the fourth aspect of the embodiments of the present invention.

In the embodiment of the present invention, a driving system receives a first signal from an application system, and then determines whether a running program in the application system is a program of an unsafe type. If the running program in the application system is a program of an unsafe type, and a current driving mode is a manual driving mode, the driving system switches from the current driving mode to an automatic driving mode.

Alternatively, an application system receives a second signal from a driving system, and then determines whether a current driving mode is a manual driving mode. If the current driving mode is the manual driving mode, and the running program is a program of an unsafe type, the application system switches the running program.

In this way, it is ensured that a driving mode is the automatic driving mode when the program of an unsafe type is running, and that the running program is not the program of an unsafe type when the driving mode is the manual driving mode. Therefore, a risk caused by distraction of attention of a driver when a program of an unsafe type is used in a process of manual driving is avoided, and driving safety is ensured.

### BRIEF DESCRIPTION OF DRAWINGS

FIG. 1 is a flowchart of an embodiment of a vehicle system control method according to an embodiment of the present invention;
FIG. 2 is a flowchart of an embodiment of another vehicle system control method according to an embodiment of the present invention;
FIG. 3 is another flowchart of an embodiment of another vehicle system control method according to an embodiment of the present invention;
FIG. 4 is another flowchart of an embodiment of another vehicle system control method according to an embodiment of the present invention;
FIG. 5 is a flowchart of an embodiment of a method for generating a safety identifier according to an embodiment of the present invention;
FIG. 6 is another flowchart of an embodiment of another vehicle system control method according to an embodiment of the present invention;
FIG. 7 is a structural diagram of an embodiment of a driving system according to an embodiment of the present invention;
FIG. 8 is another structural diagram of an embodiment of a driving system according to an embodiment of the present invention;
FIG. 9 is a structural diagram of an embodiment of an application system according to an embodiment of the present invention;
FIG. 10 is another structural diagram of an embodiment of an application system according to an embodiment of the present invention;
FIG. 11 is another structural diagram of an embodiment of an application system according to an embodiment of the present invention;
FIG. 12 is another structural diagram of an embodiment of an application system according to an embodiment of the present invention;
FIG. 13 is another structural diagram of an embodiment of an application system according to an embodiment of the present invention; and
FIG. 14 is a structural diagram of an embodiment of a vehicle control system according to an embodiment of the present invention.

### DESCRIPTION OF EMBODIMENTS

An embodiment of the present invention provides a vehicle system control method, which can improve safety of driving. The present invention further provides a related driving system, an application system, and a vehicle control system, which are separately described in the following.

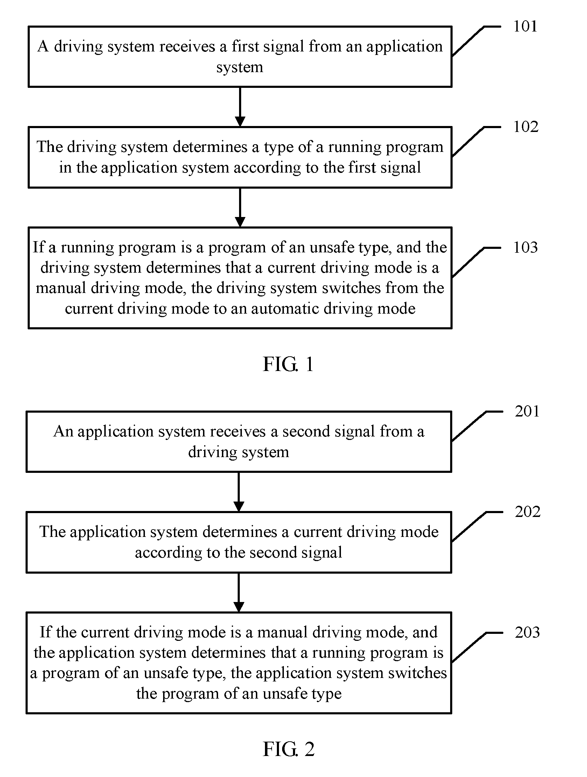

For a basic procedure of the vehicle system control method provided in this embodiment of the present invention, refer to FIG. 1, which mainly includes the following steps:
101. A driving system receives a first signal from an application system.

Generally, a control system of a vehicle includes a driving system and an application system. The driving system is configured to control driving of a vehicle, and the application system is configured to control an application program in a vehicle. There is an information channel between the driving system and the application system, so that information can be exchanged. In this embodiment, the driving system may receive the first signal from the application system, where the first signal is used to indicate a type of a running program in the application system.

The driving system may receive the first signal at different time points. For example, when switching a program, the application system generates the first signal, where the first signal indicates the type of the running program in the application system after the application system switches the program; and at this moment, the driving system receives the first signal. It may also be that the driving system automatically receives the first signal at fixed intervals to detect the type of the running program in the application system. The driving system may also receive the first signal from the application system by using another method, which is not specifically limited herein.

102. The driving system determines a type of a running program in the application system according to the first signal.

After acquiring the first signal, the driving system determines the type of the running program in the application system according to the first signal. Types of the program herein mainly include: a safe type and an unsafe type. If a program attracts much attention of a driver in a normal running process, the program is considered as a program of an unsafe type. If a program does not attract much attention of a driver in a normal running process, the program is considered as a program of a safe type. A specific method for distinguishing between a program of a safe type and a program of an unsafe type is described in detail in the following, which is not specifically limited herein.

103. If the running program is a program of an unsafe type, and the driving system determines that a current driving mode is a manual driving mode, the driving system switches from the current driving mode to an automatic driving mode.

If the driving system determines, according to the first signal, that the running program in the application system is a program of an unsafe type, and the current driving mode of the driving system is the manual driving mode, it indicates that at this moment a driver is driving operation under a condition that attention of the driver is distracted, and therefore safety cannot be ensured. Therefore, the driving system switches from the current driving module to the automatic driving mode.

In this embodiment, a driving system receives a first signal from an application system, and then determines whether a running program in the application system is a program of an unsafe type. If the running program in the application system is a program of an unsafe type, and a current driving mode is a manual driving mode, the driving system switches from the current driving mode to an automatic driving mode. In this way, it is ensured that the driving mode is the automatic driving mode when the application system of a vehicle runs the program of an unsafe type. Therefore, a risk caused by distraction of attention of a driver when the program of an unsafe type is used is avoided, and driving safety is ensured.

In this embodiment, there are multiple types of vehicles, such as a car, an airplane, and a ship, which are not specifically limited herein.

In this embodiment, there are multiple methods for distinguishing between a program of a safe type and a program of an unsafe type. Generally, if a program attracts much attention of a driver in a normal running process, the program is considered as a program of an unsafe type, such as a video play program, or a program that requires a user to input information. If a program, when running normally, does not attract much attention of a driver, the program is considered as a program of a safe type, such as a radio receiving program, or a music play program.

Criteria for distinguishing between a program of a safe type and a program of an unsafe type are not necessarily always the same, and may vary. For example, the application system may classify programs installed on a vehicle into three levels: a high-risk program, an intermediate-risk program, and a low-risk program. When a car drives on a low-traffic road, or drives at a low speed, the application system sets the high-risk program as the program of an unsafe type, and sets the intermediate-risk program and the low-risk program as the program of a safe type. When a car drives on a high-traffic road, or drives at a high speed, the application system sets the high-risk program and the intermediate-risk program as the program of an unsafe type, and sets the low-risk program as the program of a safe type. The application system may also classify programs installed on a vehicle into more levels, and another criterion may also be used to distinguish between the program of a safe type and the program of an unsafe type, which is not specifically limited herein.

Whether a program is a program of an unsafe type is first determined in the application system according to the criteria for distinguishing between the program of a safe type and the program of an unsafe type. The application system generates the first signal according to a result of the determining, and the driving system determines, according to the first signal, whether the program is a program of an unsafe type. How the application system determines whether the program is a program of an unsafe type is described in detail in a subsequent embodiment, which is not specifically limited herein.

For a better understanding of the foregoing embodiment, the following uses a specific application scenario of the foregoing embodiment as an example for description.

Now a driver is driving a car, and the car has a driving system and an application system, where the driving system can control a manual driving mode and an automatic driving mode, and the application system can control running of an application program. The driver manually drives the car, and enables an MP3 program in to listen to music. At this moment, the driving system of the car may receive a signal indicating operation of the MP3 program. In this car, the MP3 program is considered as a program of a safe type, and therefore the driving system still allows the driver to manually drive the car.

After driving for some time, the driver enables a Video play program in the application program to watch a film. However, in this car, the Video play program is considered as a program of an unsafe type. When running the Video program, the application system generates a first signal, indicating that the program of an unsafe type is running. The application system sends the first signal to an information channel between the application system and the driving system. The driving system receives the first signal, and determines that the running program in the application system is a program of an unsafe type. Because the driver is manually driving the car at this moment, the driving system switches from the manual driving mode to the automatic driving mode, and then the car is driven automatically.

The foregoing embodiment describes switching, by the driving system, a driving mode according to a signal of an application system to ensure driving safety. The following embodiment provides a vehicle system control method in which an application system switches a program according to a signal of a driving system. For a basic procedure of the method, refer to FIG. 2.

201. An application system receives a second signal from a driving system.

Generally, a control system of a vehicle includes a driving system and an application system, where the driving system is configured to control driving of a vehicle, and the application system is configured to control an application program in a vehicle. There is an information channel between the driving system and the application system, so that information can be exchanged. In this embodiment, the application system may receive the second signal form the driving system, where the second signal is used to indicate a current driving mode of the driving system.

The application system may receive the second signal at different time points. For example, when switching a driving mode, the driving system generates the second signal, where the second signal is used to indicate a driving mode to which the driving system is switched, and at this moment, the application system receives the second signal. It may also be that the application system automatically receives the second signal at fixed intervals to detect the driving mode of a current driving system. The application system may also receive the second signal from the driving system by using another method, which is not specifically limited herein.

202. The application system determines a current driving mode according to the second signal.

After acquiring the second signal, the application system determines the current driving mode of the driving system according to the second signal. Driving modes herein mainly include: a manual driving mode or an automatic driving mode.

203. If the current driving mode is a manual driving mode, and the application system determines that a running program is a program of an unsafe type, the application system switches the program of an unsafe type.

If the application system determines that the current driving mode is the manual driving mode according to the second signal, and the running program in the application system is a program of an unsafe type, it indicates that at this moment a driver is driving operation under a condition that attention of the driver is distracted, and therefore safety cannot be ensured. Therefore, the application system switches the current running program of an unsafe type to ensure that attention of the driver is not distracted, which improves safety of driving.

In this embodiment, an application system receives a second signal from a driving system, and then determines whether a current driving mode is a manual driving mode. If the current driving mode is the manual driving mode, and the running program is a program of an unsafe type, the application system switches the running program. In this way, it is ensured that a running program is not a program of an unsafe type when a driving mode is a manual driving mode, thereby reducing distraction of attention of a driver caused by the program of an unsafe type in a process of manual driving and improving safety of driving.

In this embodiment, there are multiple types of vehicles, such as a car, an airplane, and a ship, which are not specifically limited herein.

In this embodiment, there are multiple methods for the application system to switch the program of an unsafe type, for example, the application system disables the program of an unsafe type, or the application system switches the program of an unsafe type to a background process. It may also be that the application system forcibly disables some functions of the program of an unsafe type, and then sets a program of the unsafe type with some functions disabled to a program of a safe type, and continues to run the program of a safe type. The application system may also switch the program of an unsafe type by using another method, which is not specifically limited herein.

Concepts of a program of a safe type and a program of an unsafe type in this embodiment are basically the same as those in the foregoing embodiment, which are not described herein again. There are also multiple methods for distinguishing between a program of a safe type and a program of an unsafe type, which are not specifically limited herein.

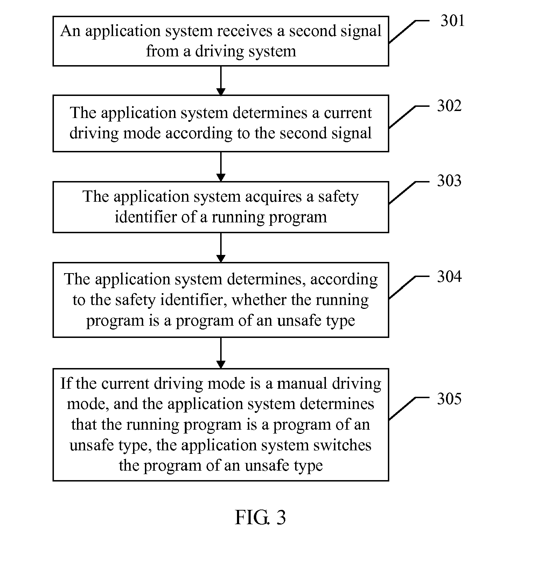

The foregoing embodiment describes in detail how the application system switches the program of an unsafe type according to the driving system. The following embodiment further describes how the application system determines whether a running program is a program of an unsafe type. Refer to FIG. 3.

301. An application system receives a second signal from a driving system.

302. The application system determines a current driving mode according to the second signal.

Steps 301 and 302 are basically the same as steps 201 and 202 in the foregoing embodiment, which are not described herein again.

303. The application system acquires a safety identifier of a running program.

To determine a safety category of the running program, the application system first needs to acquire the safety identifier of the running program. The safety identifier is used to indicate the safety category of the running program. The safety category is used to indicate that whether the program is a program of an unsafe type.

There may be multiple moments for the application system to acquire the safety identifier, including: the application system acquires the safety identifier of the program when the program is being installed, or the application system acquires the safety identifier of the program when the program is running. The application system may also acquire the safety identifier of the program at another moment, which is not specifically limited herein.

After acquiring the safety identifier of the program, the application system may save the safety identifier in an ARF (application register file, Application Register File), or may save the safety identifier in another location, or may not save the safety identifier, which is not specifically limited herein.

304. The application system determines, according to the safety identifier, whether the running program is a program of an unsafe type.

When the program is running, the application system determines, according to a correspondence between the obtained safety identifier and the safety category, whether the running program is a program of an unsafe type. If safety identifiers of programs in the application system are all saved in the ARF, the application system reads the safety identifier of the running program from the ARF, and determines, according to the safety identifier, whether the running program is a program of a safe type.

305. If the current driving mode is a manual driving mode, and the application system determines that the running program is a program of an unsafe type, the application system switches the program of an unsafe type.

Step 305 is basically the same as step 203 in the foregoing embodiment, which is not described herein again.

There is no limitation on a sequence of steps 301 and 302 and steps 303 and 304, and steps 303 and 304 may also be performed before steps 301 and 302.

This embodiment describes in detail how the application system determines a safety category of a running program. The application system first acquires a safety identifier of the running program, and then determines, according to the safety identifier, whether the running program is a program of an unsafe type. A moment for the application system to acquire the safety identifier of the program may be a moment at which the program is installed or running.

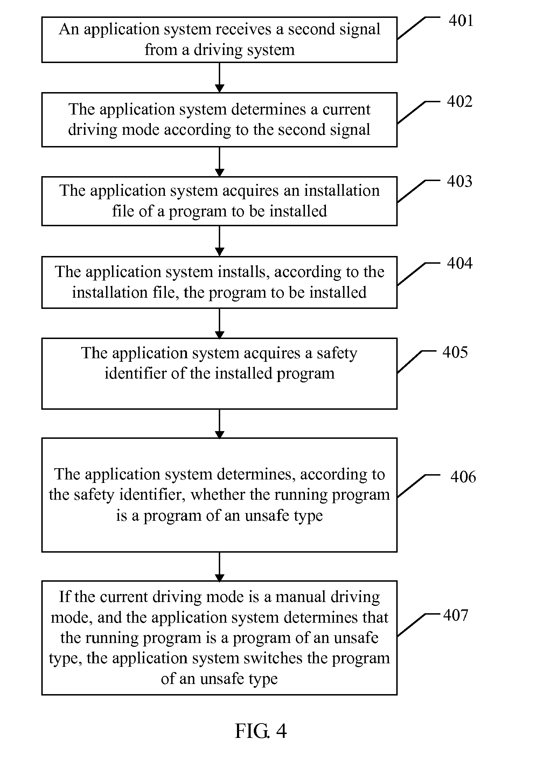

The foregoing embodiment provides the method for determining the safety category of the running program by the application system. The following embodiment further explains a procedure in which the application system acquires a safety identifier of the running program. When installing the running program, the application system may acquire the safety identifier of the program. Refer to FIG. 4.

401. An application system receives a second signal from a driving system.

402. The application system determines a current driving mode according to the second signal.

Steps 401 and 402 are basically the same as steps 301 and 302 in the foregoing embodiment, which are not described herein again.

403. The application system acquires an installation file of a program to be installed.

The application system acquires the safety identifier of the program when the program is being installed. To install the program, the application system acquires the installation file of the program to be installed. After acquiring the installation file, the application system may install, according to the installation file, the program to be installed. There are multiple methods for installing the program. Generally, the installation file is an installation package, and the application system installs the program according to the installation package. However, the application system may also use a mirroring installation method to install the program. The mirroring installation is a common method for program installation. By means of a mirroring operation, the application system may batch acquire installation files of one program or multiple programs from an external source system, and performs installation. Therefore, the application system may easily and batch install application programs of the source system. The program may also be installed by using another method, which is not specifically limited herein.

404. The application system acquires a safety identifier of the installed program.

There are multiple methods for the application system to acquire the safety identifier of the installed program, including: the application system acquires the safety identifier of the installed program from the installation file, or the application system sets the safety identifier of the installed program, or the application system acquires the safety identifier that is of the installed program and is input by a user. The application system may also acquire the safety identifier by using another method, which is not specifically limited herein.

That the application system acquires the safety identifier of the installed program from the installation file includes: the program generates the safety identifier in a compilation process, and saves the safety identifier in the installation file. The application system acquires the safety identifier from the installation file.

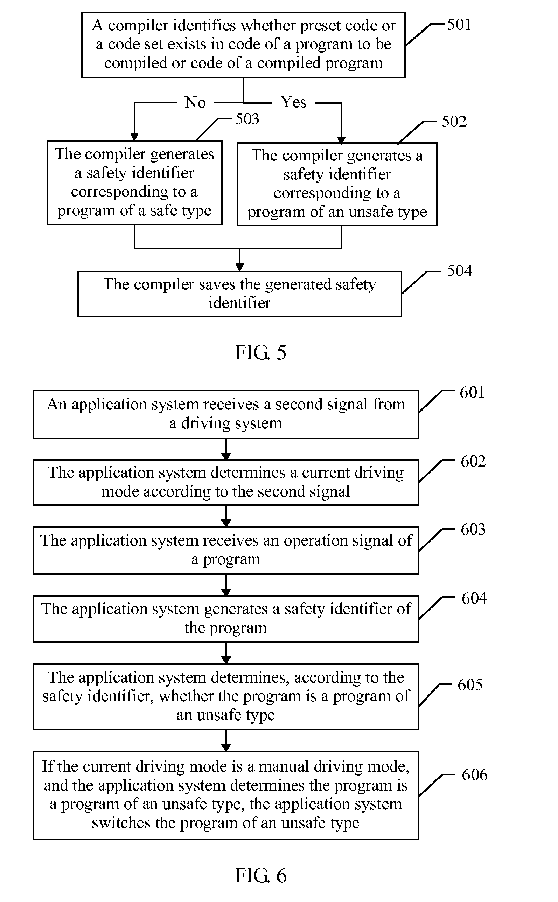

This embodiment further provides a method for generating a safety identifier in a compilation process, as shown in FIG. 5.

501. A compiler identifies whether preset code or a code set exists in code of a program to be compiled or code of a compiled program.

Generally, an application program in the application system is generated by means of compiling and linking. The method is that the compiler acquires the safety identifier of the program in a compiling stage. To acquire the safety identifier, the compiler first needs to identify whether the preset code or the code set exists in the code of the program to be compiled or the code of the compiled program. The compiler may be located in the application system, or may be independent of the application system.

The code of the program to be compiled is source code, and the code of the compiled program is target code. The source code and the target code merely differ in their forms, and the source code and the target code are equivalent in terms of functionality. Therefore, the compiler may set and acquire the safety identifier by identifying either the source code or the target code.

The preset code or the code set may be corresponding to a particular function of the program, such as a video play function, a function that acquires input information of user, where the function attracts much attention of a driver when the program is running. The preset code or the code set may also indicate a function of forcibly setting a safety category. A programmer may forcibly set the safety category of the program by writing the preset code or the code set in the program code in a compilation process. If the preset code exists in the code of a program to be compiled or the code of a compiled program, it is considered that the program attracts attention of a driver in a running process and the program is a program of an unsafe type, and then step 502 is performed. If the preset code does not exist in the code of a program to be compiled or the code of a compiled program, it is considered that the program does not attract much attention of a driver in a running process, and then step 503 is performed.

The preset code refers to a preset line, segment or type of code. For source code, functions such as DialogBox and InputBox indicate that input of a user needs to be acquired, which may be set to the preset code. For target code, a machine instruction, such as in, indicates that input of a user needs to be acquired, which may also be set to the preset code. A type of the preset code not only includes DialogBox and InputBox, but also includes another type of code, which is not specifically limited herein. The preset code may also be customized code. When writing a program, the programmer writes in the customized code for a compiler to identify.

The preset code set refers to preset code that appears repeatedly many times. The source code is used as an example. If an InputBox function appears only once in the source code, it indicates that the program, when running, requires a user to input information only once, which does not attract much attention of the user, and the program is considered as a program of a safe type. If DialogBox and InputBox appear many times in the source code, it indicates that the program, when running, requires a user to input information many times, which attracts much attention of the user, and the program is considered as a program of an unsafe type.

502. The compiler generates a safety identifier corresponding to a program of an unsafe type.

If the preset code exists in the code of the program to be compiled or the code of the compiled program, it is considered that the program attracts attention of a driver in a running process and the program is a program of an unsafe type, and then the compiler generates the safety identifier corresponding to the program of an unsafe type.

503. The compiler generates a safety identifier corresponding to a program of a safe type.

If the preset code does not exist in the code of the program to be compiled or the code of the compiled program, it is considered that the program does not attract much attention of a driver in a running process and the program is a program of a safe type, and then the compiler generates the safety identifier corresponding to the program of a safe type.

504. The compiler saves the generated safety identifier.

The safety identifier generated in steps 502 and 503 may be saved in a Data Segments file. The application system may obtain the safety identifier from the Data Segments file in a subsequent operation, and save the safety identifier in an ARF. The safety identifier may also be saved in another location, which is not specifically limited herein.

A user-defined code may also be a user-defined function, such as a SafetyClassfication () function. The programmer calls the function when writing the program, which indicates that the safety category of the program is forcibly set. This category may be a program of a safe type, or also may be a program of an unsafe type. In this case, if the compiler identifies the SafetyClassfication () function, the compiler should generate a corresponding safety identifier according to a safety category set by the function. The SafetyClassfication () is merely a name of this function, and there is another method for naming the function of this function, which is not specifically limited herein.

In addition to the method shown in FIG. 5, there is another method for generating the safety identifier in a compilation process, which is not specifically limited herein.

That the application system acquires the safety identifier of the installed program from the installation file further includes: when installing the program by using a mirroring operation, the application system acquires, from the source system, the installation file of the program to be installed, and then acquires the safety identifier from the installation file. Because a result of the mirroring operation is that the application system has a program and a function that are the same as those of the source system, provided that the source system saves a safety identifier of a particular program, the application system may acquire the safety identifier of the program when the program is being installed, by using a mirroring operation, in the application system.

That the application system sets the safety identifier of the installed program includes: the application system sets a default safety identifier for the installed program in a process of installing the program. The application system may set the safety identifier of the installed program to a safety identifier corresponding to a program of an unsafe type, or may also set the safety identifier of the installed program to an identifier corresponding to a program of a safe type, or may also set different safety identifiers for different programs, which is not specifically limited herein.

That the application system acquires the safety identifier that is of the installed program and is input by a user includes: the application system requires the user to input a safety category of the installed program in a process of installing the program, and the application system generates a corresponding safety identifier according to the safety category that is of the installed program and is input by the user.

After acquiring the safety identifier of the installed program, the application system may save the safety identifier. Therefore, when the safety identifier needs to be used, the application system may directly acquire the safety identifier from a location in which the safety identifier is saved.

405. The application system determines, according to the safety identifier, whether the running program is a program of an unsafe type.

406. If the current driving mode is a manual driving mode, and the application system determines that the running program is a program of an unsafe type, the application system switches the program of an unsafe type.

Steps 405 and 406 are basically the same as steps 304 and 305 in the foregoing embodiment, which are not described herein again.

There is no limitation on a sequence of steps 401 and 402 and steps 403 to 405, and steps 403 to 405 may also be performed before steps 401 and 402.

This embodiment describes in detail a method for acquiring a safety identifier by an application system when a program is being installed. The application system acquires an installation file of a program to be installed, installs the program to be installed, and acquires a safety identifier of the installed program. After acquiring the safety identifier, the application system determines a safety category of the running program according to the generated safety identifier. If a current driving mode is a manual driving mode, and the running program is a program of an unsafe type, the application system switches the program of an unsafe type to ensure that a program running in the application system is a program of a safe type when a driving mode is the manual driving mode, thereby reducing distraction of attention of a driver caused by the program of an unsafe type and improving driving safety.

The foregoing embodiment describes the method for acquiring the safety identifier by the application system when the program is being installed. The following embodiment describes in detail a method for acquiring a safety identifier by an application system when a program is running. Refer to FIG. 6.

601. An application system receives a second signal from a driving system.

602. The application system determines a current driving mode according to the second signal.

Steps 601 and 602 are basically the same as steps 501 and 502 in the foregoing embodiment, which are not described herein again.

603. The application system receives an operation signal of a program.

The application system may not only acquire a safety identifier of a program when the program is being installed, but also acquire a safety identifier of a program when the program is running. Before running the program, the application system receives the operation signal of the program, and prepares to run the program.

604. The application system generates a safety identifier of the program.

After receiving the operation signal of the program, the application system generates the safety identifier of the program. There are multiple specific methods for the application system to generate the safety identifier of the program, including: the application system identifies whether preset code or a code set exists in code of a program to be run; and if the preset code or the code set exists in the code of the program to be run, it is considered that some functions of the program distract attention of a driver, and then the application system generates a safety identifier corresponding to a program of an unsafe type; or if the preset code or the code set does not exist in the code of the program to be run, it is considered that none of functions of the program distracts attention of a driver, and then the application system generates a safety identifier corresponding to a program of a safe type.

A meaning of the preset code or the code set is basically the same as the meaning of the preset code or the code set in step 403, which is not described herein again.

Particularly, before this step, the application system may first determine whether the safety identifier of the program to be run is acquired. If it is determined that the safety identifier of the program to be run is not acquired, this step is performed. If it is determined that the safety identifier of the program to be run is acquired, there is no need to perform this step.

After generating the safety identifier of the program to be run, the application system may save the safety identifier. In this way, the application system only needs to generate the safety identifier when the program is running the first time, and may directly acquire the safety identifier from a location in which the safety identifier is saved when the program is running the second time or later.

This step is limited to be performed after the application system receives the operation signal of the program. Specifically, the step may be performed before the application system runs the program, or may be performed after the application system runs the program, which is not specifically limited herein.

605. The application system determines, according to the safety identifier, whether the program is a program of an unsafe type.

606. If the current driving mode is a manual driving mode, and the application system determines that the program is a program of an unsafe type, the application system switches the program of an unsafe type.

Steps 605 and 606 are basically the same as steps 506 and 507 in the foregoing embodiment, which are not described herein again.

There is no limitation on a sequence of steps 601 and 602 and steps 603 to 605, and steps 603 to 605 may also be performed before steps 601 and 602.

This embodiment describes in detail a method for acquiring a safety identifier by an application system when a program is running. The application system receives an operation signal of the program, and then generates a safety identifier of the program. After generating the safety identifier, the application system determines a safety category of the running program according to the generated safety identifier. If a current driving mode is a manual driving mode, and the running program is a program of an unsafe type, the application system switches the program of an unsafe type to ensure that a program running in the application system is a program of a safe type when a driving mode is the manual driving mode, thereby reducing distraction of attention of a driver caused by the program of an unsafe type and improving driving safety.

For a better understanding of the foregoing embodiment, the following uses a specific application scenario of the foregoing embodiment as an example for description.

Now there is a car, and the car has a driving system and an application system, where the driving system can control a manual driving mode and an automatic driving mode, and the application system can control running of an application program. The driver needs to install a Video play program in the application system. First, the driver copies an installation file of the Video play program from a USB flash drive to the application system. When installing the program, the application system requires the driver to input a safety category of the program. The driver thinks that the Video play program attracts much sight and attention of the driver in a running process, and therefore inputs: a program of an unsafe type. The application system receives information input by the driver, and generates a safety identifier corresponding to the program of an unsafe type, where the safety identifier is saved in an APF of the application system. After that, the driver drives the car by enabling an automatic driving mode, and enables the Video play program in the application program to watch a film.

After being automatically driven for some time, the car arrives in a zone in which a road condition is relatively complex, and the driver switches from the automatic driving mode to the manual driving mode to manually drive the car. The driving system generates a second signal at this moment, which is used to indicate the current driving mode is the manual driving mode, and sends the second signal to an information channel between the application system and the driving system. The application system receives the second signal, and determines that the current driving mode is manual driving mode according to the second signal. Because the Video play program is a program of an unsafe type, the application system forcibly disables the Video play program.

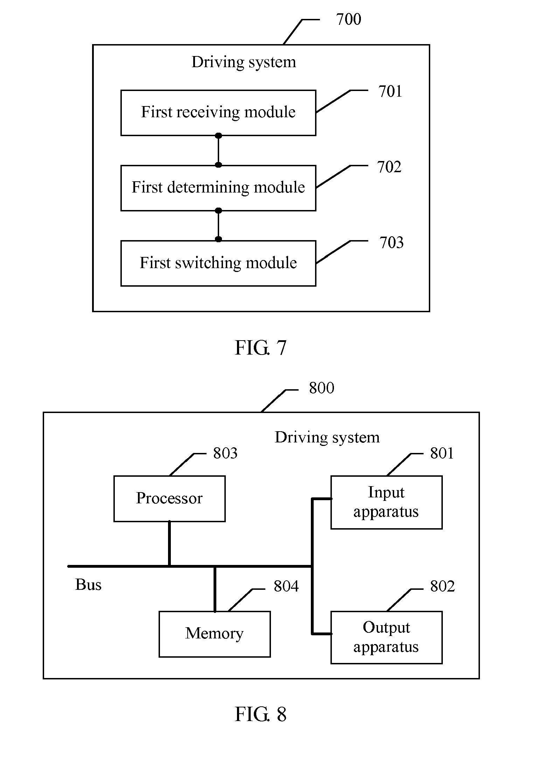

The present invention further provides a driving system 700, configured to implement the functions described in the foregoing embodiments. For a basic structure of the driving system 700, refer to FIG. 7. The driving system 700 includes:
a first receiving module 701, configured to receive a first signal from an application system;
a first determining module 702, configured to determine a type of a running program in the application system according to the first signal received by the first receiving module 701; and
a first switching module 703, configured to: in a case that the first determining module 702 determines that the running program is a program of an unsafe type and a current driving mode is a manual driving mode, switch the current driving mode to an automatic driving mode.

In this embodiment, a first receiving module 701 receives a first signal from an application system, and then a first determining module 702 determines whether a running program in the application system is a program of an unsafe type. If the running program in the application system is a program of an unsafe type, and a current driving mode is a manual driving mode, a first switching module 703 switches the current driving mode to an automatic driving mode. In this way, it is ensured that the driving mode is the automatic driving mode when the application system of a vehicle runs the program of an unsafe type. Therefore, a risk caused by distraction of attention of a driver when the program of an unsafe type is used is avoided, and driving safety is ensured.

For a better understanding of the foregoing embodiment, the following uses a specific application scenario of the foregoing embodiment as an example for description.

Now a driver is driving a car, and the car has a driving system and an application system, where the driving system can control a manual driving mode and an automatic driving mode, and the application system can control running of an application program. The driver manually drives the car, and enables an MP3 program to listen to music. At this moment, the driving system of the car may receive a signal indicating operation of the MP3 program. In this car, the MP3 program is considered as a program of a safe type, and therefore the driving system still allows the driver to manually drive the car.

After driving for some time, the driver enables a Video play program in the application program to watch a film. However, in this car, the Video play program is considered as a program of an unsafe type. When running the Video program, the application system generates a first signal, indicating that the program of an unsafe type is running. The application system sends the first signal to an information channel between the application system and the driving system. The first receiving module 701 in the driving system receives the first signal, and the first determining module 702 determines that the running program in the application system is a program of an unsafe type. Because the driver is manually driving the car at this moment, the first switching module 703 switches the manual driving mode to the automatic driving mode, and then the car is driven automatically.

The foregoing describes the driving system in this embodiment of the present invention from a perspective of a cellular functional entity. The following describes the driving system in this embodiment of the present invention from a perspective of hardware processing. Referring to FIG. 8, another embodiment of the driving system 800 in this embodiment of the present invention includes:
an input apparatus 801, an output apparatus 802, a processor 803, and a memory 804 (a quantity of the processor 803 in the driving system 800 may be one or more, and one processor 803 is used as an example in FIG. 8). In some embodiments of the present invention, the input apparatus 801, the output apparatus 802, the processor 803, and the memory 804 may be connected by using a bus or another means. A bus connection is used as an example in FIG. 8.

By calling an operation instruction stored in the memory 804, the processor 803 is configured to perform the following steps:
receive a first signal from an application system;
determine a type of a running program in the application system according to the first signal; and
if the running program is a program of an unsafe type, and the driving system determines that the current driving mode is a manual driving mode, switch the current driving mode to an automatic driving mode.

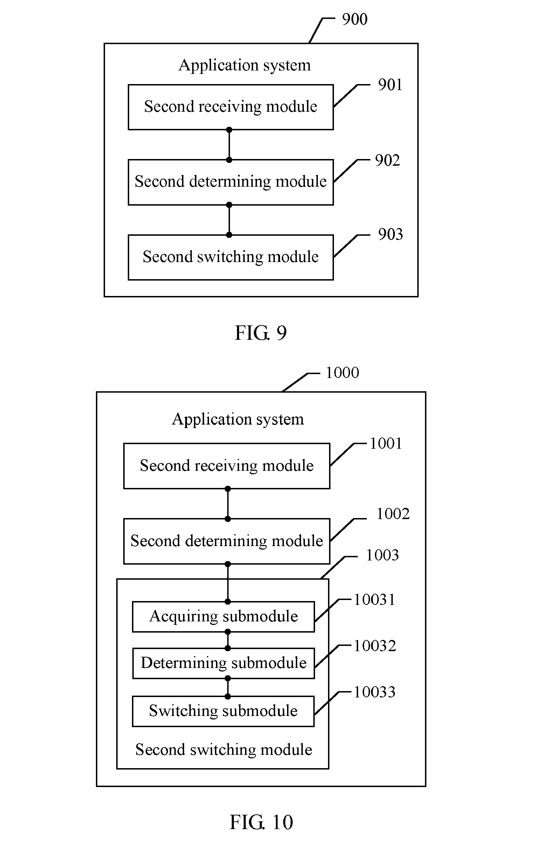

In some embodiments of the present invention, the driving system 800 further performs the following steps:
The present invention further provides an application system 900, configured to implement the functions described in the foregoing embodiments. For a basic structure of the application system 900, refer to FIG. 9.
   a second receiving module 901, configured to receive a second signal from a driving system;
   a second determining module 902, configured to determine a current driving mode according to the second signal received by the second receiving module 901; and
   a second switching module 903, configured to: in a case that the second determining module 902 determines that the current driving mode is a manual driving mode and a running program is a program of an unsafe type, switch the program of an unsafe type.

In this embodiment, a second receiving module 901 receives a second signal from a driving system, and then a second determining module 902 determines whether a current driving mode is a manual driving mode. If the current driving mode is a manual driving mode, and a running program is a program of an unsafe type, a second switching module 903 switches the running program. In this way, it is ensured that a running program is not a program of an unsafe type when a driving mode is a manual driving mode, thereby reducing distraction of attention of a driver caused by the program of an unsafe type in a process of manual driving and improving safety of driving.

The foregoing embodiment describes in detail how the application system switches the program of an unsafe type according to the driving system. The following embodiment further describes how the application system determines whether a running program is a program of an unsafe type. Referring to FIG. 10, the application system 1000 includes:
a second receiving module 1001, configured to receive a second signal from a driving system;
a second determining module 1002, configured to determine a current driving mode according to the second signal received by the second receiving module 1001; and
a second switching module 1003, configured to: in a case that the second determining module 1002 determines that the current driving mode is a manual driving mode and a running program is a program of an unsafe type, switch the program of an unsafe type, where the second switching module 1003 includes:
   an acquiring submodule 10031, configured to acquire a safety identifier of the running program;
   a determining submodule 10032, configured to determine, according to the safety identifier acquired by the acquiring submodule 10031, whether the running program is a program of an unsafe type; and
   a switching submodule 10033, configured to switch the program of an unsafe type.

This embodiment describes in detail how the application system determines a safety category of a running program. An acquiring submodule 10031 first acquires a safety identifier of the running program, and then a determining submodule 10032 determines, according to the safety identifier, whether the running program is a program of an unsafe type. A moment for the application system to acquire the safety identifier of the program may be a moment at which the program is installed or running.

The foregoing embodiment provides the application system that can implement determining of the safety category of the running program. The following embodiment further explains the acquiring submodule 10031 in an application system.

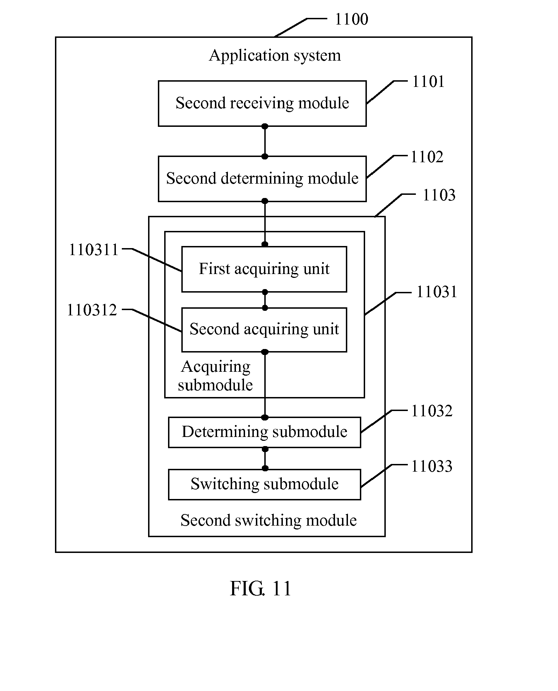

Referring to FIG. 11, the application system 1100 includes:
a second receiving module 1101, configured to receive a second signal from a driving system;
a second determining module 1102, configured to determine a current driving mode according to the second signal received by the second receiving module 1101; and
a second switching module 1103, configured to: in a case that the second determining module 1102 determines that the current driving mode is a manual driving mode and a running program is a program of an unsafe type, switch the program of an unsafe type, where the second switching module 1103 includes:
   an acquiring submodule 11031, configured to acquire a safety identifier of the running program; where the acquiring submodule 11031 includes:
   a first acquiring unit 110311, configured to acquire an installation file of a program to be installed; and
   a second acquiring unit 110312, configured to acquire a safety identifier of a program installed by the program installation unit 110311;
a determining submodule 11032, configured to determine, according to the safety identifier acquired by the second acquiring unit 110312, whether the running program is a program of an unsafe type; and
a switching submodule 11033, configured to switch the program of an unsafe type.

This embodiment describes in detail an application system for acquiring a safety identifier when a program is being installed. A first acquiring unit 110311 acquires an installation file of a program to be installed, and then a second acquiring unit 110312 acquires a safety identifier of the installed program. After the safety identifier is acquired, a determining submodule 11032 determines a safety category of the running program according to the generated safety identifier. If a current driving mode is a manual driving mode, and the running program is a program of an unsafe type, a switching submodule 11033 switches the program of an unsafe type to ensure that a program running in the application system is a program of a safe type when a driving mode is the manual driving mode, thereby reducing distraction of attention of a driver caused by the program of an unsafe type and improving driving safety.

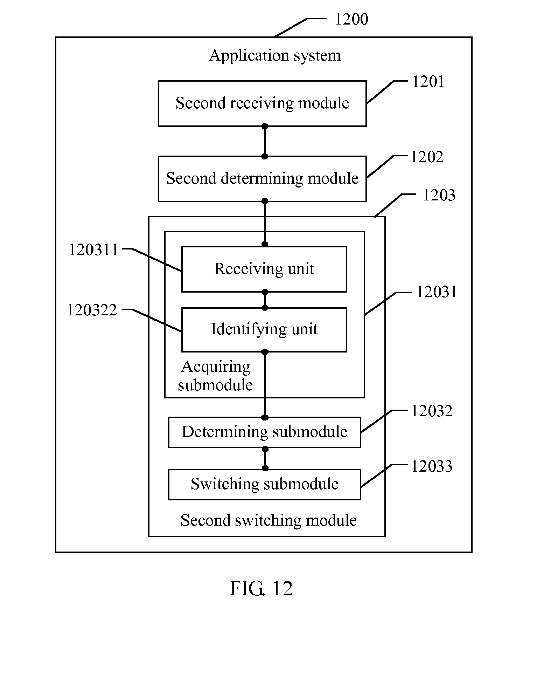

The foregoing embodiment describes the application system for acquiring the safety identifier when the program is being installed. The following embodiment describes in detail an application system for acquiring a safety identifier when a program is running. Referring to FIG. 12, the application system 1200 includes:
a second receiving module 1201, configured to receive a second signal from a driving system;
a second determining module 1202, configured to determine a current driving mode according to the second signal received by the second receiving module 1201; and
a second switching module 1203, configured to: in a case that the second determining module 1202 determines that the current driving mode is a manual driving mode and a running program is a program of an unsafe type, switch the program of an unsafe type, where the second switching module 1203 includes:
   an acquiring submodule 12031, configured to acquire a safety identifier of the running program, where the acquiring submodule 12031 includes:
      a receiving unit 120311, configured to receive an operation signal of the program; and
      an identifying unit 120312, configured to generate the safety identifier of the program;
   a determining submodule 12032, configured to determine, according to the safety identifier generated by the identifying unit 120312, whether the running program is a program of an unsafe type; and
   a switching submodule 12033, configured to switch the program of an unsafe type.

This embodiment describes in detail an application system that can acquire a safety identifier when a program is running. A receiving unit 120311 receives an operation signal of the program, and then an identifying unit 120312 generates the safety identifier of the program. After the safety identifier is generated, a determining submodule 12032 determines a safety category of the running program according to the generated safety identifier. If a current driving mode is a manual driving mode, and the running program is a program of an unsafe type, the switching submodule 12033 switches the program of an unsafe type to ensure that a program running in the application system is a program of a safe type when a driving mode is the manual driving mode, thereby reducing distraction of attention of a driver caused by the program of an unsafe type and improving driving safety.

For a better understanding of the foregoing embodiment, the following uses a specific application scenario of the foregoing embodiment as an example for description.

Now there is a car, and the car has a driving system and an application system, where the driving system can control a manual driving mode and an automatic driving mode, and the application system can control running of an application program. The driver needs to install a Video play program in the application system. First, the driver copies an installation file of the Video play program from a USB flash drive to the first acquiring unit 110311 of the application system; when the application system is installing the program, the second acquiring unit 110312 requires the driver to input a safety category of the program. The driver thinks that the Video play program attracts much sight and attention of the driver in a running process, and therefore inputs: a program of an unsafe type. The second acquiring unit 110312 receives information input by the driver, generates a safety identifier corresponding to the program of an unsafe type, and saves the safety identifier in an APF of the application system. After that, the driver drives the car by enabling an automatic driving mode, and enables the Video play program in the application program to watch a film.

After being automatically driven for some time, the car arrives in a zone in which a road condition is relatively complex, and the driver switches from the automatic driving mode to the manual driving mode to manually drive the car. The driving system generates a second signal at this moment, which is used to indicate the current driving mode is the manual driving mode, and sends the second signal to an information channel between the application system and the driving system. The second receiving module 1101 of the application system receives the second signal, and the second determining module 1102 determines that the current driving mode is manual driving mode according to the second signal. Because the determining submodule 11032 determines that the Video play program is a program of an unsafe type, the switching module 11033 forcibly disables the Video play program.

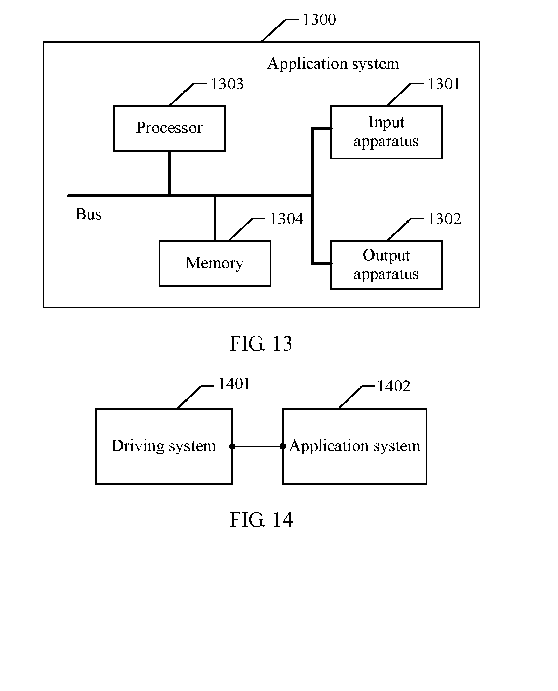

The foregoing describes the application system in this embodiment of the present invention from a perspective of a cellular functional entity. The following describes the application system in this embodiment of the present invention from a perspective of hardware processing. Referring to FIG. 13, another embodiment of the application system 1300 in this embodiment of the present invention includes:
an input apparatus 1301, an output apparatus 1302, a processor 1303, and a memory 1304 (a quantity of processors 1303 in the application system 1300 may be one or more, and one processor 1303 is used as an example in FIG. 13). In some embodiments of the present invention, the input apparatus 1301, the output apparatus 1302, the processor 1303, and the memory 1304 may be connected by using a bus or another means. A bus connection is used as an example in FIG. 13.

By calling an operation instruction stored in the memory 1304, the processor 1303 is configured to perform the following steps:
receive a second signal from a driving system;
determine a current driving mode according to the second signal; and
if the current driving mode is a manual driving mode, and the application system determines that a running program is a program of an unsafe type, switch the program of an unsafe type.

In some embodiments of the present invention, the application system 1300 further performs the following steps:
disable the program of an unsafe type, or switch the program of an unsafe type to a background process;
acquire a safety identifier of the running program;
determine, according to the safety identifier, whether the running program is a program of an unsafe type;
acquire an installation file of a program to be installed;
acquire a safety identifier of the installed program;
receive an operation signal of the program; and
generate a safety identifier of the program.

The foregoing embodiment is the application system provided in the present invention. The present invention further provides a vehicle control system. For a basic structure of the vehicle control system, refer to FIG. 14.
1401. A driving system, where the driving system is similar to the driving system shown in FIG. 7, and therefore is not described herein again; and
1402. An application system, which is configured to control running of a program in the application system.

The present invention further provides a vehicle control system, as shown in FIG. 14.
1401. A driving system, which is configured to control a driving mode of a vehicle; and
1402. An application system, where the application system is similar to the application system shown in FIG. 9 to FIG. 12, and therefore is not described herein again.

It may be clearly understood by a person skilled in the art that, for the purpose of convenient and brief description, for a detailed working process of the foregoing system, module, and unit, reference may be made to a corresponding process in the foregoing method embodiments, and details are not described herein again.

In the several embodiments provided in the present application, it should be understood that the disclosed system and method may be implemented in other manners. For example, the described system embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A vehicle system control method, comprising:
receiving, by an application system, a second signal from a driving system, wherein the application system is configured to control an application program in a vehicle;
determining, by the application system, a current driving mode according to the second signal; and
if the current driving mode is a manual driving mode, and the application system determines that a running program is a program of an unsafe type, switching, by the application system, the program of an unsafe type.

2. The vehicle system control method according to claim 1, wherein the program of an unsafe type comprises: a program that requires a user to input information, or a video play program.

3. The vehicle system control method according to claim 1 or 2, wherein the switching, by the application system, the program of an unsafe type comprises:
disabling, by the application system, the program of an unsafe type, or switching, by the application system, the program of an unsafe type to a background process.

4. The vehicle system control method according to claim 1 or 2, wherein that the application system determines that a running program is a program of an unsafe type comprises:
acquiring, by the application system, a safety identifier of the running program; and
determining, by the application system according to the safety identifier, whether the running program is a program of an unsafe type.

5. The vehicle system control method according to claim 4, wherein the acquiring, by the application system, a safety identifier of the running program comprises:
acquiring, by the application system when installing the program, an installation file of the program, and acquiring the safety identifier from the installation file; or
setting, by the application system when installing the program, the safety identifier of the program; or
acquiring, by the application system when installing the program, the safety identifier that is of the program and is input by a user.

6. The vehicle system control method according to claim 4, wherein the acquiring, by the application system, a safety identifier of the running program comprises:
receiving, by the application system, an operation signal of the program; and
generating, by the application system, the safety identifier of the program.

7. A vehicle control method, comprising:
receiving, by a driving system, a first signal from an application system, wherein the application system is configured to control an application program in a vehicle;
determining, by the driving system, a type of a running program in the application system according to the first signal; and
if the running program is a program of an unsafe type, and the driving system determines that a current driving mode is a manual driving mode, switching, by the driving system, from the current driving mode to an automatic driving mode.

8. The vehicle system control method according to claim 7, wherein the program of an unsafe type comprises: a program that requires a user to input information, or a video play program.

9. A driving system, comprising:
a first receiving module, configured to receive a first signal from an application system;
a first determining module, configured to determine a type of a running program in the application system according to the first signal received by the first receiving module; and
a first switching module, configured to: in a case that the first determining module determines that the running program is a program of an unsafe type and a current driving mode is a manual driving mode, switch the current driving mode to an automatic driving mode.

10. An application system, comprising:
a second receiving module, configured to receive a second signal from a driving system;
a second determining module, configured to determine a current driving mode according to the second signal received by the second receiving module; and
a second switching module, configured to: in a case that the second determining module determines that the current driving mode is a manual driving mode and a running program is a program of an unsafe type, switch the program of an unsafe type.

11. The application system according to claim 10, wherein the second switching module comprises:
an acquiring submodule, configured to acquire a safety identifier of the running program;
a determining submodule, configured to determine, according to the safety identifier acquired by the acquiring submodule, whether the running program is a program of an unsafe type; and
a switching submodule, configured to switch the program of an unsafe type.

12. The application system according to claim 11, wherein the switching submodule is specifically configured to:
disable the program of an unsafe type, or switch the program of an unsafe type to a background process.

13. The application system according to claim 11 or 12, wherein the acquiring submodule comprises:
a first acquiring unit, configured to acquire an installation file of a program to be installed; and
a second acquiring unit, configured to acquire a safety identifier of the installed program.

14. The application system according to claim 11 or 12, wherein the acquiring submodule comprises:
a receiving unit, configured to receive an operation signal of the program; and
an identifying unit, configured to generate the safety identifier of the program.

15. A vehicle control system, comprising: an application system and the driving system according to claim 9.

16. A vehicle control system, comprising: a driving system and the application system according to any one of claims 10 to 14.

17. The system according to claim 16, wherein the driving system is the driving system according to claim 9.
